# EUROPEAN PATENT SPECIFICATION

(11) **EP 4 129 038 B1**
(45) Date of publication and mention of the grant of the patent: **05.11.2025**
(21) Application number: 20927350.7
(22) Date of filing: 27.03.2020
(51) Int. Cl.: A01D 34/00, G06Q 50/02, A01D 34/84

(54) **OPERATION MANAGEMENT DEVICE, OPERATION MANAGEMENT PROGRAM AND OPERATION MANAGEMENT METHOD**
BETRIEBSVERWALTUNGSVORRICHTUNG, BETRIEBSVERWALTUNGSPROGRAMM UND BETRIEBSVERWALTUNGSVERFAHREN
DISPOSITIF DE GESTION D'OPÉRATION, PROGRAMME DE GESTION D'OPÉRATION ET PROCÉDÉ DE GESTION D'OPÉRATION

(43) Date of publication of application: 08.02.2023
(73) Proprietor: HONDA MOTOR CO., LTD., Tokyo 105-8404 (JP)
(72) Inventor: TAKAHASHI Hiroto, Wako-shi, Saitama 351-0193 (JP); KAWAKAMI Toshiaki, Wako-shi, Saitama 351-0193 (JP); YOKOYAMA Taro, Wako-shi, Saitama 351-0193 (JP); SONG Wei, Wako-shi, Saitama 351-0193 (JP); KANISAWA Takuya, Wako-shi, Saitama 351-0193 (JP)
(74) Representative: Weickmann & Weickmann PartmbB
(86) International application number: PCT/JP2020/014193
(87) International publication number: WO 2021/192259

(56) References cited:
- EP-A1- 2 939 508
- EP-A1- 2 939 508
- WO-A1-2015/147108
- WO-A1-2015/147108
- JP-A- 2002 279 335
- JP-A- 2002 279 335
- JP-A- 2009 028 831
- JP-A- 2009 199 359
- JP-A- 2018 106 527

## Description

### [Technical Field]

The present invention relates to an operation management device, an operation management program, and an operation management method.

### [Background Art]

Main operations implemented in the case of lawn maintenance include lawn mowing operation and edge cutting operation. The lawn mowing operation is an operation of cutting lawns short in the entire area where the lawns are growing. On the other hand, the edge cutting operation is an operation of cutting lawns short in the vicinity of the boundary of the area in which the lawns are growing. Examples of the device used in the lawn mowing operation include a lawn mower disclosed in JP H06-153650. Also, examples of the device used in the edge cutting operation include an edge cutter disclosed in JP H02-131524.

In general, the lawn mowing operation and the edge cutting operation are not implemented simultaneously at the same point because it is required that the lawn mower and the edge cutter do not interfere with each other. Therefore, at each point in the vicinity of the boundary of the area where the lawns are growing, after the lawn mowing operation is completed, the edge cutting operation is implemented. Alternatively, at each point in the vicinity of the boundary of the area where the lawns are growing, after the edge cutting operation is completed, the lawn mowing operation is implemented.

WO 2015/147 108 A1 discloses a remote control device, wherein: when the finish of the butt turning of an auxiliary moving work vehicle is determined as a result of a signal transmitted from the steering sensor provided in the auxiliary moving work vehicle, a work resume signal is transmitted and the travel of an autonomous travel vehicle starts.

JP 2002 279 335 A discloses a workflow system in which, when a given work is finished, a notification is automatically provided to start the next work.

### [Summary of Invention]

### [Technical Problem]

However, in recent years, there have been cases where a lawn mower that automatically implements a lawn mowing operation and an edge cutter that automatically implements an edge cutting operation are used. In such a case, the timing of starting the edge cutting operation is unknown, and the edge cutting operation may be delayed. Similarly, in such a case, the timing of starting the lawn mowing operation is unknown, and the lawn mowing operation may be delayed. Furthermore, these situations may occur even when an operator operates a lawn mower or an edge cutter to maintain a lawn. In addition, these situations may occur not only in the case of maintaining a lawn but also in the case of maintaining a grass field where plants other than the lawn are growing.

The present invention has been made in view of such circumstances, and an object of the present invention is to provide an operation management device, an operation management program, and an operation management method capable of efficiently implementing maintenance of a grass field.

### [Solution to Problem]

(1) The invention provides an operation management device according to claim 1, an operation management program according to claim 13, and an operation management method according to claim 14. Preferred embodiments are defined in the dependent claims.

### [Advantageous Effects of Invention]

According to the invention, when first operation completion data is acquired, by outputting operation implementation data which prompts implementation of a second operation different from a first operation, maintenance of a grass field can be efficiently implemented.

Further, on the basis of a first operation completion area indicated by the first operation completion data, by outputting operation implementation data which prompts implementation of the second operation, in an area where the distance from the boundary of a first operation area where the first operation is implemented or the boundary of an area adjacent to the first operation completion area is equal to or less than a predetermined distance and which is included in the first operation completion area or in an area adjacent to the first operation completion area, implementation of the second operation in the area where the second operation can be implemented is prompted, so that the maintenance of a grass field can be efficiently implemented.

According to claim 2, when there is a second operation non-implemented area that is adjacent to the boundary indicated by the boundary data and in which the second operation is not implemented, by outputting the operation implementation data which prompts preferential implementation of the second operation in the second operation non-implemented area, the area where the second operation can be implemented is expanded at an early stage, so that the maintenance of a grass field can be efficiently implemented.

According to claim 3, by generating boundary data indicating a boundary in contact with a non-operation area adjacent to the first operation completion area, implementation of the second operation after more accurately grasping the area where the second operation can be implemented is prompted, so that the maintenance of a grass field can be efficiently implemented.

According to claim 4, by outputting the operation implementation data to the terminal, an information that the second operation can be started is transmitted to an operator in charge of implementing the second operation to prompt implementation of the second operation, so that the maintenance of a grass field can be efficiently implemented.

According to claim 5, by outputting the operation implementation data to the operation machine that implements the second operation, an information that the second operation can be started is transmitted to the operation machine to prompt implementation of the second operation, so that the maintenance of a grass field can be efficiently implemented.

According to claim 6, when the situation of the first operation indicated by the first operation situation data indicating a situation of the first operation implemented in the first operation completion area satisfies a predetermined condition, the maintenance state of a portion where the first operation is not sufficiently implemented is corrected by prompting reimplementation of the first operation, so that the maintenance of a grass field can be efficiently implemented.

According to claim 7, by outputting the operation reimplementation data to the terminal, an information that the first operation should be implemented again is transmitted to an operator in charge of implementing the first operation, so that the maintenance of a grass field can be efficiently implemented.

According to claim 8, by outputting the operation reimplementation data to the operation machine that implements the first operation, an information that the first operation should be implemented again is transmitted to the operation machine that implements the first operation, so that the maintenance of a grass field can be efficiently implemented.

According to claim 9, when the second operation completion data indicating that the second operation has been completed is acquired, implementation of an additional operation different from the first operation and the second operation is prompted, so that the maintenance of a grass field can be efficiently implemented.

According to claim 10, by outputting the additional operation implementation data to the terminal, an operator in charge of implementing the additional operation is prompted to implement the additional operation, so that it is possible to efficiently implement the maintenance of a grass field including the implementation of the additional operation.

According to claim 11, by outputting the additional operation implementation data to the operation machine that implements the additional operation, an additional operation machine is prompted to implement the additional operation, so that the maintenance of a grass field can be efficiently implemented.

According to claim 12, by prompting implementation of the second operation using an operation machine having a cut width smaller than the operation machine that implements the first operation, even if the boundary of the area where lawns are planted has a complicated shape, it is possible to prompt the second operation to be accurately implemented along the boundary.

### [Brief Description of Drawings]

Fig. 1 is a diagram illustrating an example of an operation management system according to an embodiment of the present invention.
Fig. 2 is a diagram for describing an example of processing performed by an operation management device according to an embodiment of the present invention.
Fig. 3 is a flowchart illustrating an example of processing performed by an operation management device according to an embodiment of the present invention.
Fig. 4 is a flowchart illustrating an example of processing performed by an operation management device according to an embodiment of the present invention.
Fig. 5 is a flowchart illustrating an example of processing performed by an operation management device according to an embodiment of the present invention.

### [Description of Embodiments]

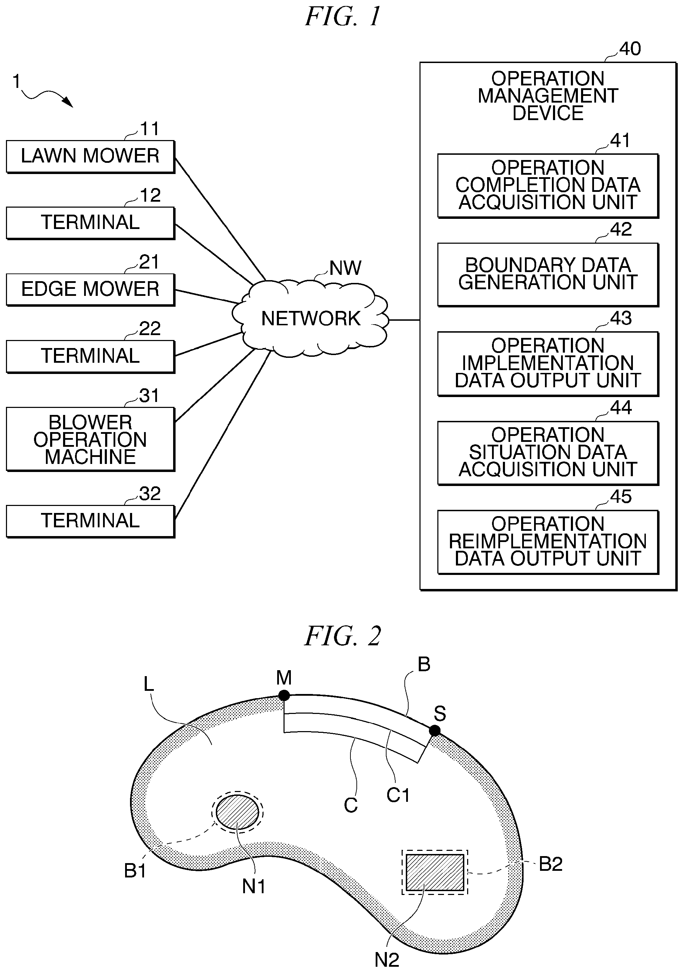

An operation management system according to the embodiment will be described with reference to Figs. 1 and 2. Fig. 1 is a diagram illustrating an example of an operation management system according to the embodiment of the present invention. As illustrated in Fig. 1, an operation management system 1 includes a lawn mower 11, a terminal 12, an edge cutter 21, a terminal 22, a blower operation machine 31, a terminal 32, and an operation management device 40. The lawn mower 11, the terminal 12, the edge cutter 21, the terminal 22, and the operation management device 40 are all connected to network NW and can communicate with each other. The network NW is, for example, the Internet, an intranet, a wide area network (WAN), or a local area network (LAN).

The lawn mower 11 is a device used for implementing a lawn mowing operation. The lawn mowing operation is an operation of cutting lawns short in an area other than the vicinity of the boundary in the area where the lawns are planted. In addition, the lawn mower 11 may be an operation machine operated by an operator who implements the lawn mowing operation, or may be an operation machine that autonomously operates to implement the lawn mowing operation. The terminal 12 is, for example, a smartphone or a tablet including a touch panel display, and is carried by the operator who implements the lawn mowing operation.

The edge cutter 21 is a device used for implementing an edge cutting operation. The edge cutting operation is an operation of cutting lawns short in the vicinity of the boundary in the area where the lawns are planted. The edge cutting operation is an operation different from the lawn mowing operation because the lawn planted in the area extends and is sometimes on a curbstone or the like defining the boundary. The edge cutter 21 includes a disk-shaped cutting portion having a blade formed at an edge, and moves in the vicinity of the boundary of the area where the lawns are planted while rotating the cutting portion to cut the lawns. In addition, the surface including the main surface of the disk-shaped cut portion may intersect the surface on which the lawns to be cut by the edge cutter 21 are planted, or may be parallel to the surface on which the lawns to be cut by the edge cutter 21 are planted. In addition, the edge cutter 21 may be an operation machine operated by an operator who implements the edge cutting operation, or may be an operation machine that autonomously operates to implement the edge cutting operation. The terminal 22 is, for example, a smartphone or a tablet including a touch panel display, and is carried by the operator who implements the edge cutting operation.

The blower operation machine 31 is a device used for implementing a blower operation. The blower operation includes at least one of an operation of sucking cut lawns generated by cutting the lawns by the lawn mowing operation or the edge cutting operation and an operation of blowing the cut lawns back to the area where the lawns are planted. In addition, the blower operation machine 31 may be an operation machine operated by an operator who implements the blower operation, or may be an operation machine that autonomously operates to implement the blower operation. The terminal 32 is, for example, a smartphone or a tablet, and a blower operation is carried by the operator.

As illustrated in Fig. 1, the operation management device 40 is realized by, for example, a server, and includes an operation completion data acquisition unit 41, a boundary data generation unit 42, an operation implementation data output unit 43, an operation situation data acquisition unit 44, and an operation reimplementation data output unit 45.

These components are realized by, for example, a hardware processor such as a central processing unit (CPU) executing a program. At least a part of these components may be realized by a hardware (including circuitry) such as a large scale integration (LSI), an application specific integrated circuit (ASIC), a field-programmable gate array (FPGA), or a graphics processing unit (GPU), or by software and hardware in cooperation. The program may be stored in advance in a storage device (a storage device including a non-transitory storage medium) such as a hard disk drive (HDD) or a flash memory, or may be stored in a detachable storage medium (a non-transitory storage medium) such as a DVD or a CD-ROM and installed in the storage device when inserted into a drive device.

The operation completion data acquisition unit 41 acquires first operation completion data indicating that a first operation related to maintenance of a lawn has been completed. The first operation referred to herein is, for example, a lawn mowing operation or an edge cutting operation. When the first operation is a lawn mowing operation, for example, the operation completion data acquisition unit 41 acquires the first operation completion data from the lawn mower 11 or the terminal 12. Also, when the first operation is an edge cutting operation, for example, the operation completion data acquisition unit 41 acquires the first operation completion data from the edge cutter 21 or the terminal 22. Further, the operation completion data acquisition unit 41 determines whether or not the first operation completion data is acquired.

Moreover, the first operation completion data may be data indicating a first operation completion area where the first operation has been completed. For example, the first operation completion data is data generated on the basis of a path along which the lawn mower 11, the terminal 12, the edge cutter 21, or the terminal 22 has moved. Further, these paths are specified using, for example, a global positioning system (GPS) function mounted on the lawn mower 11, the terminal 12, the edge cutter 21, or the terminal 22.

Fig. 2 is a diagram for describing an example of processing performed by an operation management device according to the embodiment of the present invention. Fig. 2 illustrates an area L, a boundary B, a point S, a point M, a curve C, a non-operation area N1, a non-operation area N2, a boundary B1, a boundary B2, and a curve C1.

The area L is an area where lawns are planted and an operation related to the maintenance of a lawn is implemented, and is defined by the boundary B. Also, an area region sandwiched between a portion between the point S and the point M and the curve C in the boundary B is an example of the first operation completion area described above.

On the basis of the first operation completion area indicated by the first operation completion data, the boundary data generation unit 42 specifies a boundary of the first operation area where the first operation is implemented or a boundary of an area adjacent to the first operation completion area, and generates boundary data indicating at least one of these boundaries. The first operation area referred to herein is, for example, an area L illustrated in Fig. 2. Further, the boundary is, for example, the boundary B illustrated in Fig. 2.

For example, when the first operation is a lawn mowing operation, the terminal 12 displays the area L and a map around the area L on the touch panel display, and the terminal 12 accepts an operation of tracing a boundary of the area L with a finger by the operator who implements the lawn mowing operation.

Next, the lawn mower 11 acquires, for example, data indicating a boundary of the area L from the terminal 12, sets a path on which the lawn mower 11 travels while implementing the lawn mowing operation, and implements the lawn mowing operation while recording a path through which the lawn mower 11 passes by using a GPS and Visual Simultaneous Localization And Mapping (V-SLAM). In addition, the lawn mower 11 records data indicating that the lawn mowing operation has been completed in association with a cell corresponding to the path on which the lawn mower 11 has traveled among cells included in the area L and the map around the area L. The data is, for example, "1". The lawn mower 11 recognizes an area associated with the data as the first operation completion area.

The boundary data generation unit 42 acquires data indicating the path on which the lawn mower 11 has traveled while implementing the lawn mowing operation, and generates first operation completion data indicating the first operation completion area on the basis of the data. Then, the boundary data generation unit 42 specifies a cell adjacent to a cell associated with the data indicating that the lawn mowing operation has been completed among cells adjacent to a cell through which the boundary of the first operation completion area passes, thereby specifying the boundary adjacent to the locus. An example of the boundary is a portion sandwiched between the point S and the point M in the boundary of the area L illustrated in Fig. 2. Note that V-SLAM is a technique of using a still image or a moving image and estimating three-dimensional information of an object depicted in these images and the position and posture of a camera that has captured these images. In addition, the boundary data generation unit 42 implements similar processing also when the first operation is an edge cutting operation.

Further, boundary data indicating a boundary in contact with a non-operation area adjacent to the first operation completion area may be generated. The non-operation area referred to herein is an area surrounded by the first operation area, where lawns are not planted due to arrangement of artificial objects such as buildings and objects or natural obstacles such as ponds, trees, and rocks, and is, for example, the non-operation area N1 and the non-operation area N2 illustrated in Fig. 2. Furthermore, when the non-operation area is the non-operation area N1 illustrated in Fig. 2, the boundary data generation unit 42 specifies the boundary B1 illustrated in Fig. 2. Similarly, when the non-operation area is the non-operation area N2 illustrated in Fig. 2, the boundary data generation unit 42 specifies the boundary B2 illustrated in Fig. 2.

In a case where the first operation completion data is acquired, the operation implementation data output unit 43 outputs operation implementation data which prompts implementation of a second operation that is an operation related to the maintenance of a lawn and is different from the first operation. The second operation referred to herein is, for example, an edge cutting operation when the first operation is a lawn mowing operation, and is a lawn mowing operation when the first operation is an edge cutting operation. When the second operation is an edge cutting operation, the operation implementation data output unit 43 outputs the operation implementation data to the edge cutter 21 or the terminal 22. Also, when the second operation is a lawn mowing operation, the operation implementation data output unit 43 outputs the operation implementation data to the lawn mower 11 or the terminal 12.

In addition, the operation implementation data output unit 43 may output operation implementation data which prompts implementation of the second operation in an area where the distance from the boundary indicated by the boundary data is equal to or less than a predetermined distance and which is included in the first operation completion area or in an area adjacent to the first operation completion area. The area is, for example, an area sandwiched between a portion between the point S and the point M and the curve C1 in the boundary B illustrated in Fig. 2. Moreover, the predetermined distance is, for example, a distance between a portion between the point S and the point M and the curve C1 in the boundary B.

Further, when there is a second operation non-implemented area that is adjacent to the boundary indicated by the boundary data and in which the second operation is not implemented, the operation implementation data output unit 43 may output operation implementation data which prompts preferential implementation of the second operation in the second operation non-implemented area. The second operation non-implemented area is, for example, an area indicated by dot hatching in Fig. 2.

Furthermore, the operation implementation data output unit 43 may output operation implementation data which prompts implementation of the second operation using an operation machine having a cut width smaller than the operation machine that implements the first operation. The cut width referred to herein is a width at which the lawn is cut in a direction perpendicular to a direction in which the operation machine moves.

The operation situation data acquisition unit 44 acquires first operation situation data indicating a situation of the first operation implemented in the first operation completion area indicated by the first operation completion data. The first operation situation data is generated, for example, on the basis of lawns depicted in a still image or a moving image captured using a camera mounted on an operation machine which implements the second operation, a camera carried by an operator who implements the second operation, or a camera mounted on the terminal. For example, the first operation situation data may be generated by using a difference between a color of an area where a relatively large amount of uncut lawns is depicted in the still image or the moving image and a color of an area where a relatively small amount of uncut lawns is depicted.

When the situation of the first operation indicated by the first operation situation data satisfies a predetermined condition, the operation reimplementation data output unit 45 outputs operation reimplementation data which prompts reimplementation of the first operation. The predetermined condition referred to herein is, for example, that a statistical value such as an average value of lengths of lawns depicted in the still image or the moving image obtained by imaging the first operation completion area described above exceeds a predetermined length. In addition, the operation reimplementation data output unit 45 outputs the operation reimplementation data to the lawn mower 11 or the terminal 12. Further, the operation reimplementation data output unit 45 determines whether or not the situation of the first operation indicated by the first operation situation data satisfies a predetermined condition.

Also, the operation completion data acquisition unit 41 may further acquire second operation completion data indicating that the second operation has been completed. In this case, the operation completion data acquisition unit 41 determines whether or not the second operation completion data has been acquired. Furthermore, in this case, the operation implementation data output unit 43 outputs additional operation implementation data which prompts implementation of an additional operation different from the first operation and the second operation to the blower operation machine 31 or the terminal 32. The additional operation referred to herein is, for example, the blower operation described above.

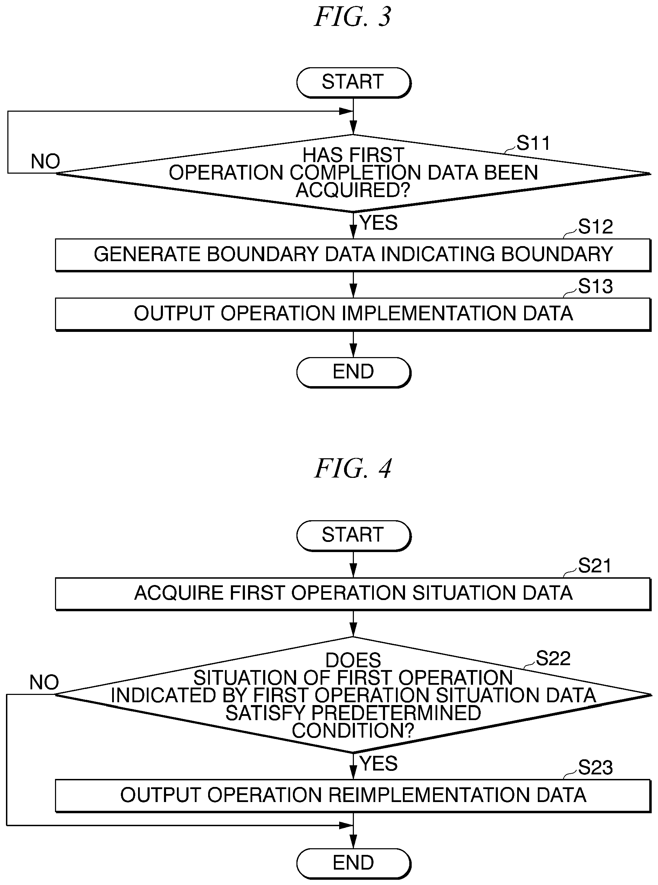

Next, an example of processing performed by an operation management device according to the embodiment will be described with reference to Fig. 3. Fig. 3 is a flowchart illustrating an example of processing performed by an operation management device according to the embodiment of the present invention.

In step S11, the operation completion data acquisition unit 41 determines whether or not the first operation completion data has been acquired. When the operation completion data acquisition unit 41 determines that the first operation completion data has been acquired (step S11: YES), the processing proceeds to step S12. On the other hand, when the operation completion data acquisition unit 41 determines that the first operation completion data has not been acquired (step S11: NO), the processing waits until it is determined that the first operation completion data has been acquired.

In step S12, the boundary data generation unit 42 generates the boundary data indicating a boundary.

In step S13, the operation implementation data output unit 43 outputs the operation implementation data.

Next, an example of processing performed by an operation management device according to the embodiment will be described with reference to Fig. 4. Fig. 4 is a flowchart illustrating an example of processing performed by an operation management device according to the embodiment of the present invention.

In step S21, the operation situation data acquisition unit 44 acquires the first operation situation data.

In step S22, the operation reimplementation data output unit 45 determines whether or not the situation of the first operation indicated by the first operation situation data satisfies a predetermined condition. When the operation reimplementation data output unit 45 determines that the situation of the first operation indicated by the first operation situation data satisfies the predetermined condition (step S22: YES), the processing proceeds to step S23. On the other hand, when the operation reimplementation data output unit 45 determines that the situation of the first operation indicated by the first operation situation data does not satisfy the predetermined condition (step S22: NO), the processing is completed.

In step S23, the operation reimplementation data output unit 45 outputs the operation reimplementation data.

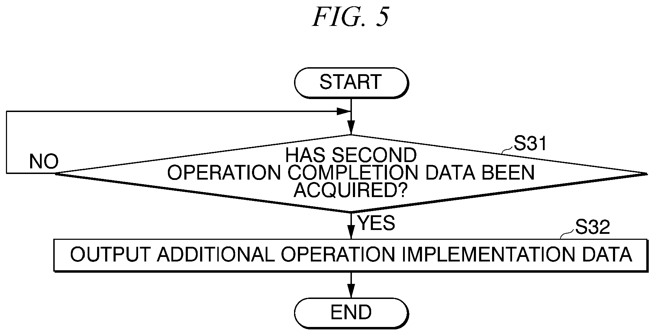

Next, an example of processing performed by an operation management device according to the embodiment will be described with reference to Fig. 5. Fig. 5 is a flowchart illustrating an example of processing performed by an operation management device according to the embodiment of the present invention.

In step S31, the operation completion data acquisition unit 41 determines whether or not the second operation completion data has been acquired. When the operation completion data acquisition unit 41 determines that the second operation completion data has been acquired (step S31: YES), the processing proceeds to step S32. On the other hand, when the operation completion data acquisition unit 41 determines that the second operation completion data has not been acquired (step S31: NO), the processing waits until it is determined that the second operation completion data has been acquired.

In step S32, the operation implementation data output unit 43 outputs the additional operation implementation data.

The operation management system 1 according to the embodiment has been described above focusing on the operation management device 40.

When the first operation completion data is acquired, the operation management device 40 outputs operation implementation data which prompts implementation of a second operation that is an operation related to the maintenance of a lawn and is different from the first operation. As a result, the operation management device 40 prompts implementation of the second operation after the second operation becomes implementable, so that the maintenance of a lawn can be efficiently implemented.

In addition, the operation management device 40 acquires first operation completion data indicating a first operation completion area in which the first operation has been completed, generates boundary data indicating a boundary of the first operation area, and outputs operation implementation data which prompts implementation of the second operation in an area where the distance from the boundary indicated by the boundary data is equal to or less than a predetermined distance and which is included in the first operation completion area or in an area adjacent to the first operation completion area. As a result, the operation management device 40 prompts implementation of the second operation in the area where the second operation can be implemented, so that the maintenance of a lawn can be efficiently implemented.

**In** addition, when there is a second operation non-implemented area that is adjacent to the boundary indicated by the boundary data and in which the second operation is not implemented, the operation management device 40 outputs operation implementation data which prompts preferential implementation of the second operation in the second operation non-implemented area. As a result, the operation management device 40 expands the area where the second operation can be implemented at an early stage, so that the maintenance of a lawn can be efficiently implemented.

In addition, the operation management device 40 generates boundary data indicating a boundary in contact with a non-operation area adjacent to the first operation completion area. As a result, the operation management device 40 prompts implementation of the second operation after more accurately grasping the area where the second operation can be implemented, so that the maintenance of a lawn can be efficiently implemented.

In addition, the operation management device 40 outputs operation implementation data to the terminal 12 or the terminal 22. As a result, the operation management device 40 transmits an information that the second operation can be started to an operator in charge of implementing the second operation to prompt implementation of the second operation, so that the maintenance of a lawn can be efficiently implemented.

In addition, the operation management device 40 outputs operation implementation data to the lawn mower 11 or the edge cutter 21. As a result, the operation management device 40 transmits an information that the second operation can be started to the operation machine that implements the second operation to prompt implementation of the second operation, so that the maintenance of a lawn can be efficiently implemented.

In addition, the operation management device 40 acquires first operation situation data indicating a situation of the first operation implemented in the first operation completion area indicated by the first operation completion data, and when the situation of the first operation indicated by the first operation situation data satisfies a predetermined condition, outputs operation reimplementation data which prompts reimplementation of the first operation. As a result, the operation management device 40 corrects the maintenance state of a portion where the first operation is not sufficiently implemented, so that the maintenance of a lawn can be efficiently implemented.

In addition, the operation management device 40 outputs the operation reimplementation data to the terminal 12. As a result, the operation management device 40 transmits an information that the first operation should be implemented again to an operator in charge of implementing the first operation, so that the maintenance of a lawn can be efficiently implemented.

In addition, the operation management device 40 outputs the operation reimplementation data to the lawn mower 11 or the edge cutter 21. As a result, the operation management device 40 transmits an information that the first operation should be implemented again to the operation machine that implements the first operation, so that the maintenance of a lawn can be efficiently implemented.

In addition, the operation management device 40 further acquires second operation completion data indicating that the second operation has been completed, and when the second operation completion data is acquired, the operation management device 40 outputs additional operation implementation data which prompts implementation of an additional operation different from the first operation and the second operation. As a result, the operation management device 40 prompts to implement the additional operation different from the first operation and the second operation, so that it is possible to efficiently implement the maintenance of a lawn including the implementation of the additional operation.

In addition, the operation management device 40 outputs the additional operation implementation data to the terminal 32. As a result, the operation management device 40 prompts an operator in charge of implementing the additional operation to implement the additional operation, so that it is possible to efficiently implement the maintenance of a lawn including the implementation of the additional operation.

In addition, the operation management device 40 outputs the additional operation implementation data to the operation machine that implements the additional operation. As a result, the operation management device 40 prompts an additional operation machine to implement the additional operation, so that the maintenance of a lawn can be efficiently implemented.

In addition, the operation management device 40 outputs operation implementation data which prompts implementation of the second operation using an operation machine having a cut width smaller than the operation machine that implements the first operation. As a result, even if the boundary of the area where lawns are planted has a complicated shape, the operation management device 40 can prompt the second operation to be accurately implemented along the boundary.

In the embodiment described above, the maintenance of a lawn has been described as an example, but the present invention is not limited thereto. The operation management device 40 can be applied not only to the maintenance of a lawn but also to overall maintenance of a grass field. In addition, the grass field referred to herein includes not only an area where lawns are planted but also an area where plants other than lawns are grown. Furthermore, examples of the area where plants other than lawns are grown include parks, open lots, and riverbeds.

Further, in the embodiment described above, the case where the lawn mowing operation is implemented using the lawn mower 11 and the edge cutting operation is implemented using the edge cutter 21 has been described as an example, but the present invention is not limited thereto. That is, the lawn mowing operation and the edge cutting operation may be implemented by an operation machine having both the function of the lawn mower 11 and the function of the edge cutter 21.

In addition, in the embodiment described above, the case where the operation management device 40 is realized by the server has been described as an example, but the present invention is not limited thereto. For example, the operation management device 40 may be incorporated in the lawn mower 11, the edge cutter 21, or the blower operation machine 31.

In addition, in the embodiment described above, the case where all the functions of the operation management device 40 are realized by one device has been described as an example, but the present invention is not limited thereto. That is, the operation management device 40 may be realized by a plurality of devices, and each device may realize a part of the functions described above.

While the modes for carrying out the present invention have been described above using the embodiment, the present invention is not limited to the embodiment described above, and various modifications and substitutions are possible without departing from the scope of the present claims.

### [Reference Signs List]

1 Operation management system
11 Lawn mower
12 Terminal
21 edge cutter
22 Terminal
40 Operation management device
41 Operation completion data acquisition unit
42 Boundary data generation unit
43 Operation implementation data output unit
44 Operation situation data acquisition unit
45 Operation reimplementation data output unit

## Claims

1. An operation management device, comprising:
an operation completion data acquisition unit (41) configured to acquire first operation completion data indicating that a first operation related to maintenance of a grass field has been completed and including a first operation completion area where the first operation has been completed; and
an operation implementation data output unit (43) configured to output, when the first operation completion data is acquired, operation implementation data which prompts implementation of a second operation that is an operation related to the maintenance of the grass field and is different from the first operation,
wherein
the operation management device (40) further comprising a boundary data generation unit configured to generate boundary data indicating a boundary of a first operation area where the first operation is implemented or a boundary of the area adjacent to the first operation completion area, on the basis of the first operation completion area indicated by the first operation completion data, and
the operation implementation data output unit (43) outputs the operation implementation data which prompts implementation of the second operation in an area where a distance from the boundary indicated by the boundary data is equal to or less than a predetermined distance and which is included in the first operation completion area or in an area adjacent to the first operation completion area.

2. The operation management device according to claim 1, wherein,
when there is a second operation non-implemented area that is adjacent to the boundary indicated by the boundary data and in which the second operation is not implemented, the operation implementation data output unit (43) outputs the operation implementation data which prompts preferential implementation of the second operation in the second operation non-implemented area.

3. The operation management device according to claim 1 or 2, wherein
the boundary data generation unit (42) generates the boundary data indicating the boundary in contact with a non-operation area adjacent to the first operation completion area.

4. The operation management device according to any one of claims 1 to 3, wherein
the operation implementation data output unit (43) outputs the operation implementation data to a terminal (12).

5. The operation management device according to any one of claims 1 to 3, wherein
the operation implementation data output unit (43) outputs the operation implementation data to an operation machine (21) that implements the second operation.

6. The operation management device according to any one of claims 1 to 3, further comprising:
an operation situation data acquisition unit (44) configured to acquire first operation situation data indicating a situation of the first operation implemented in the first operation completion area indicated by the first operation completion data; and
an operation reimplementation data output unit (45) configured to output operation reimplementation data which prompts reimplementation of the first operation when the situation of the first operation indicated by the first operation situation data satisfies a predetermined condition.

7. The operation management device according to claim 6, wherein
the operation reimplementation data output unit (45) outputs the operation reimplementation data to a terminal (22).

8. The operation management device according to claim 6, wherein
the operation reimplementation data output unit (45) outputs the operation reimplementation data to an operation machine (11) that implements the first operation.

9. The operation management device according to any one of claims 1 to 8, wherein
the operation completion data acquisition unit (41) further acquires second operation completion data indicating that the second operation has been completed, and
when the second operation completion data is acquired, the operation implementation data output unit (43) outputs additional operation implementation data which prompts implementation of an additional operation different from the first operation and the second operation.

10. The operation management device according to claim 9, wherein
the operation implementation data output unit (43) outputs the additional operation implementation data to a terminal (32).

11. The operation management device according to claim 9, wherein
the operation implementation data output unit (43) outputs the additional operation implementation data to an operation machine (31) that implements the additional operation.

12. The operation management device according to any one of claims 1 to 11, wherein
the operation implementation data output unit (43) outputs the operation implementation data which prompts implementation of the second operation using an operation machine having a cut width smaller than the operation machine (11) that implements the first operation.

13. **An operation management program that**, when run on a computer, implements the method of claim 14.

14. **An operation management method, comprising**
an operation completion data acquisition step configured to acquire first operation completion data indicating that a first operation related to maintenance of a grass field has been completed and including a first operation completion area where the first operation has been completed; and
an operation implementation data output step configured to output, when the first operation completion data is acquired, operation implementation data which prompts implementation of a second operation that is an operation related to the maintenance of the grass field and is different from the first operation,
and a boundary data generation step configured to generate boundary data indicating a boundary of a first operation area where the first operation is implemented or a boundary of the area adjacent to the first operation completion area, on the basis of the first operation completion area indicated by the first operation completion data, wherein
the operation implementation data output step outputs the operation implementation data which prompts implementation of the second operation in an area where a distance from the boundary indicated by the boundary data is equal to or less than a predetermined distance and which is included in the first operation completion area or in an area adjacent to the first operation completion area.

## Patentansprüche

1. Betriebsverwaltungsvorrichtung, umfassend:
eine Betriebsfertigstellungsdaten-Erfassungseinheit (41), die konfiguriert ist, um erste Betriebsfertigstellungsdaten zu erfassen, die angeben, dass ein in Bezug auf Wartung eines Rasens bezogener erster Betrieb fertiggestellt worden ist, und die eine erste Betriebsfertigstellungsfläche enthalten, wo der erste Betrieb fertiggestellt worden ist; und
eine Betriebsimplementationsdaten-Ausgabeeinheit (43), die konfiguriert ist, um, wenn die ersten Betriebsfertigstellungsdaten erfasst werden, Betriebsimplementationsdaten auszugeben, die zur Implementation eines zweiten Betriebs auffordern, der ein Betrieb in Bezug auf die Wartung des Rasens ist und sich von dem ersten Betrieb unterscheidet,
wobei
die Betriebsverwaltungsvorrichtung (40) ferner eine Grenzdatenerzeugungseinheit aufweist, die konfiguriert ist, um Grenzdaten, die eine Grenze einer ersten Betriebsfläche angeben, wo der erste Betrieb implementiert wird,
oder eine Grenze der der ersten Betriebsfertigstellungsfläche benachbarten Fläche, auf der Basis der durch die ersten Betriebsfertigstellungsdaten angegebenen ersten Betriebsfertigstellungsfläche zu erzeugen, und
die Betriebsimplementationsdaten-Ausgabeeinheit (43) die Betriebsimplementationsdaten ausgibt, die zur Implementation des zweiten Betriebs in einer Fläche auffordern, wo ein Abstand von der durch die Grenzdaten angegebenen Grenze gleich oder kleiner als ein vorbestimmter Abstand ist, und die in der ersten Betriebsfertigstellungsfläche oder in einer der ersten Betriebsfertigstellungsfläche benachbarten Fläche enthalten ist.

2. Die Betriebsverwaltungsvorrichtung nach Anspruch 1, wobei,
wenn es eine zweiter Betrieb-nichtimplementierte-Fläche gibt, die der durch die Grenzdaten angegebenen Grenze benachbart ist und in der der zweite Betrieb nicht implementiert ist, die Betriebsimplementationsdaten-Ausgabeeinheit (43) die Betriebsimplementationsdaten ausgibt, die zu einer bevorzugten Implementation des zweiten Betriebs in der zweiten Betrieb-nichtimplementierten-Fläche auffordert.

3. Die Betriebsverwaltungsvorrichtung nach Anspruch 1 oder 2, wobei
die Grenzdatenerzeugungseinheit (42) Grenzdaten erzeugt, die die Grenze in Kontakt mit einer der ersten Betriebsfertigstellungsfläche benachbarten Nicht-Betriebsfläche angeben.

4. Die Betriebsverwaltungsvorrichtung nach einem der Ansprüche 1 bis 3, wobei
die Betriebsimplementationsdaten-Ausgabeeinheit (43) die Betriebsimplementationsdaten an ein Endgerät (12) ausgibt.

5. Die Betriebsverwaltungsvorrichtung nach einem der Ansprüche 1 bis 3, wobei
die Betriebsimplementationsdaten-Ausgabeeinheit (43) die Betriebsimplementationsdaten an eine Betriebsmaschine (21) ausgibt, die den zweiten Betrieb implementiert.

6. Die Betriebsverwaltungsvorrichtung nach einem der Ansprüche 1 bis 3, die ferner aufweist:
eine Betriebssituationsdaten-Erfassungseinheit (44), die konfiguriert ist, um erste Betriebssituationsdaten zu erfassen, die eine Situation des ersten Betriebs angeben, der in der durch die ersten Betriebsfertigstellungsdaten angegebenen ersten Betriebsfertigstellungsfläche implementiert wird; und
eine Betriebsreimplementationsdaten-Ausgabeeinheit (45), die konfiguriert ist, um Betriebsreimplementationsdaten auszugeben, die zu einer Reimplementation des ersten Betriebs auffordern, wenn die durch die ersten Betriebssituationsdaten angegebene Situation des ersten Betriebs eine vorbestimmte Bedingung erfüllt.

7. Die Betriebsverwaltungsvorrichtung nach Anspruch 6, wobei die Betriebsreimplementationsdaten-Ausgabeeinheit (45) die Betriebsreimplementationsdaten an ein Endgerät (22) ausgibt.

8. Die Betriebsverwaltungsvorrichtung nach Anspruch 6, wobei die Betriebsreimplementationsdaten-Ausgabeeinheit (45) die Betriebsreimplementationsdaten an eine Betriebsmaschine (11) ausgibt, die den ersten Betrieb implementiert.

9. Die Betriebsverwaltungsvorrichtung nach einem der Ansprüche 1 bis 8, wobei
die Betriebsfertigstellungsdaten-Erfassungseinheit (41) ferner zweite Betriebsfertigstellungsdaten erfasst, die angeben, dass der zweite Betrieb fertiggestellt worden ist, und
wenn die zweiten Betriebsfertigstellungsdaten erfasst werden, die Betriebsimplementationsdaten-Ausgabeeinheit (43) zusätzliche Betriebsimplementationsdaten ausgibt, die zur Implementation eines zusätzlichen Betriebs fordern, die sich von dem ersten Betrieb und dem zweiten Betrieb unterscheidet.

10. Die Betriebsverwaltungsvorrichtung nach Anspruch 9, wobei
die Betriebsimplementationsdaten-Ausgabeeinheit (43) die zusätzlichen Betriebsimplementationsdaten an ein Endgerät (32) ausgibt.

11. Die Betriebsverwaltungsvorrichtung nach Anspruch 9, wobei
die Betriebsimplementationsdaten-Ausgabeeinheit (43) die zusätzlichen Betriebsimplementationsdaten an eine Betriebsmaschine (31) ausgibt, die den zusätzlichen Betrieb implementiert.

12. Die Betriebsverwaltungsvorrichtung nach einem der Ansprüche 1 bis 11, wobei
die Betriebsimplementationsdaten-Ausgabeeinheit (43) die Betriebsimplementationsdaten ausgibt, die zur Implementation des zweiten Betriebs mittels einer Betriebsmaschine auffordern, die eine schmalere Schnittbreite hat als die Betriebsmaschine (11), die den ersten Betrieb implementiert.

13. Betriebsverwaltungsprogramm, das, wenn es auf einem Computer läuft, das Verfahren von Anspruch 14 implementiert.

14. Betriebsverwaltungsverfahren, umfassend:
einen Betriebsfertigstellungsdaten-Erfassungsschritt, der konfiguriert ist, um erste Betriebsfertigstellungsdaten zu erfassen, die angeben, dass ein in Bezug auf Wartung eines Rasens bezogener erster Betrieb fertiggestellt worden ist, und die eine erste Betriebsfertigstellungsfläche enthalten, wo der erste Betrieb fertiggestellt worden ist; und
einen Betriebsimplementationsdaten-Ausgabeschritt, der konfiguriert ist, um, wenn die ersten Betriebsfertigstellungsdaten erfasst werden, Betriebsimplementationsdaten auszugeben, die zur Implementation eines zweiten Betriebs auffordern, der ein Betrieb in Bezug auf die Wartung des Rasens ist und sich von dem ersten Betrieb unterscheidet, und
einen Grenzdatenerzeugungsschritt, der konfiguriert ist, um Grenzdaten, die eine Grenze einer ersten Betriebsfläche angeben, wo der erste Betrieb implementiert wird, oder eine Grenze der der ersten Betriebsfertigstellungsfläche benachbarten Fläche, auf der Basis der durch die ersten Betriebsfertigstellungsdaten angegebenen ersten Betriebsfertigstellungsfläche zu erzeugen, wobei
der Betriebsimplementationsdaten-Ausgabeschritt die Betriebsimplementatinsdaten ausgibt, die zur Implementation des zweiten Betriebs in einer Fläche auffordern, wo ein Abstand von der durch die Grenzdaten angegebenen Grenze gleich oder kleiner als ein vorbestimmter Abstand ist, und die in der ersten Betriebsfertigstellungsfläche oder in einer der ersten Betriebsfertigstellungsfläche benachbarten Fläche enthalten ist.

## Revendications

1. Dispositif de gestion d'opération, comportant :
une unité d'acquisition de données d'achèvement d'opération (41) configurée pour acquérir des données d'achèvement de première opération indiquant qu'une première opération liée à l'entretien d'un champ de gazon a été achevée et incluant une zone d'achèvement de première opération où la première opération a été achevée ; et
une unité de délivrance de données de mise en œuvre d'opération (43) configurée pour délivrer, lorsque les données d'achèvement de première opération sont acquises, des données de mise en œuvre d'opération qui invitent à mettre en œuvre une deuxième opération qui est une opération liée à l'entretien du champ de gazon et qui est différente de la première opération,
dans lequel
le dispositif de gestion d'opération (40) comportant en outre une unité de génération de données de frontière configurée pour générer des données de frontière indiquant une frontière d'une zone de première opération où la première opération est mise en œuvre ou une frontière de la zone adjacente à la zone d'achèvement de première opération, sur la base de la zone d'achèvement de première opération indiquée par les données d'achèvement de première opération, et
l'unité de délivrance de données de mise en œuvre d'opération (43) délivre les données de mise en œuvre d'opération qui invitent à mettre en œuvre la deuxième opération dans une zone où une distance de la frontière indiquée par les données de frontière est égale ou inférieure à une distance prédéterminée et qui est incluse dans la zone d'achèvement de première opération ou dans une zone adjacente à la zone d'achèvement de première opération.

2. Système de gestion d'opération selon la revendication 1, dans lequel
lorsqu'il existe une zone d'absence de mise en œuvre de deuxième opération qui est adjacente à la frontière indiquée par les données de frontière et dans laquelle la deuxième opération n'est pas mise en œuvre, l'unité de délivrance de données de mise en œuvre d'opération (43) délivre les données de mise en œuvre d'opération qui invitent à la mise en œuvre préférentielle de la deuxième opération dans la zone d'absence de mise en œuvre de deuxième opération.

3. Dispositif de gestion d'opération selon la revendication 1 ou 2, dans lequel
l'unité de génération de données de frontière (42) génère les données de frontière indiquant la frontière en contact avec une zone d'absence d'opération adjacente à la zone d'achèvement de première opération.

4. Système de gestion d'opération selon l'une quelconque des revendications 1 à 3, dans lequel
l'unité de délivrance de données de mise en œuvre d'opération (43) délivre les données de mise en œuvre d'opération à un terminal (12).

5. Système de gestion d'opération selon l'une quelconque des revendications 1 à 3, dans lequel
l'unité de délivrance de données de mise en œuvre d'opération (43) délivre les données de mise en œuvre d'opération à une machine d'opération (21) qui met en œuvre la deuxième opération.

6. Système de gestion d'opération selon l'une quelconque des revendications 1 à 3, comportant en outre :
une unité d'acquisition de données de situation d'opération (44) configurée pour acquérir des données de situation de première opération indiquant une situation de la première opération mise en œuvre dans la zone d'achèvement de première opération indiquée par les données d'achèvement de première opération ; et
une unité de délivrance de données de remise en œuvre d'opération (45) configurée pour délivrer des données de remise en œuvre d'opération qui invitent à remettre en œuvre la première opération lorsque la situation de la première opération indiquée par les données de situation de première opération remplit une condition prédéterminée.

7. Système de gestion d'opération selon la revendication 6, dans lequel
l'unité de délivrance de données de remise en œuvre d'opération (45) délivre les données de remise en œuvre d'opération à un terminal (22).

8. Système de gestion d'opération selon la revendication 6, dans lequel
l'unité de délivrance de données de remise en œuvre d'opération (45) délivre les données de remise en œuvre d'opération à une machine d'opération (11) qui met en œuvre la première opération.

9. Système de gestion d'opération selon l'une quelconque des revendications 1 à 8, dans lequel
l'unité d'acquisition de données d'achèvement d'opération (41) acquiert en outre des données d'achèvement de deuxième opération indiquant que la deuxième opération a été achevée, et
lorsque les données d'achèvement de deuxième opération sont acquises, l'unité de délivrance de données de mise en œuvre d'opération (43) délivre des données de mise en œuvre d'opération supplémentaire qui invitent à mettre en œuvre une opération supplémentaire différente de la première opération et de la deuxième opération.

10. Système de gestion d'opération selon la revendication 9, dans lequel
l'unité de délivrance de données de mise en œuvre d'opération (43) délivre les données de mise en œuvre d'opération supplémentaire à un terminal (32).

11. Système de gestion d'opération selon la revendication 9, dans lequel
l'unité de sortie de données de mise en œuvre d'opération (43) délivre les données de mise en œuvre d'opération supplémentaire à une machine d'opération (31) qui met en œuvre l'opération supplémentaire.

12. Système de gestion d'opération selon l'une quelconque des revendications 1 à 11, dans lequel
l'unité de délivrance de données de mise en œuvre d'opération (43) délivre les données de mise en œuvre d'opération qui invitent à mettre en œuvre la deuxième opération à l'aide d'une machine d'opération présentant une largeur de coupe inférieure à la machine d'opération (11) qui met en œuvre la première opération.

13. **Programme de gestion d'opération qui,** lorsqu'il est exécuté sur un ordinateur, met en œuvre le procédé selon la revendication 14.

14. **Procédé de gestion d'opération, comportant**
une étape d'acquisition de données d'achèvement d'opération configurée pour acquérir des données d'achèvement de première opération indiquant qu'une première opération liée à l'entretien d'un champ de gazon a été achevée et incluant une zone d'achèvement de première opération où la première opération a été achevée ; et
une étape de délivrance de données de mise en œuvre d'opération configurée pour délivrer, lorsque les données d'achèvement de première opération sont acquises, des données de mise en œuvre d'opération qui invitent à mettre en œuvre une deuxième opération qui est une opération liée à l'entretien du champ de gazon et qui est différente de la première opération,
et une étape de génération de données de frontière configurée pour générer des données de frontière indiquant une frontière d'une zone de première opération où la première opération est mise en œuvre ou une frontière de la zone adjacente à la zone d'achèvement de première opération, sur la base de la zone d'achèvement de première opération indiquée par les données d'achèvement de première opération, dans lequel
l'étape de délivrance de données de mise en œuvre d'opération délivre les données de mise en œuvre d'opération qui invitent à mettre en œuvre la deuxième opération dans une zone où une distance de la frontière indiquée par les données de frontière est égale ou inférieure à une distance prédéterminée et qui est incluse dans la zone d'achèvement de première opération ou dans une zone adjacente à la zone d'achèvement de première opération.
